# EUROPEAN PATENT SPECIFICATION

(11) **EP 2 933 129 B1**
(45) Date of publication and mention of the grant of the patent: **20.09.2017**
(21) Application number: 14743367.6
(22) Date of filing: 21.01.2014
(51) Int. Cl.: B60K 35/00, B60K 37/00, B60R 11/02, G02B 27/01, B60R 11/00

(54) **HEAD-UP DISPLAY DEVICE**
BLICKFELDANZEIGEVORRICHTUNG
DISPOSITIF D'AFFICHAGE TÊTE HAUTE

(30) Priority: 22.01.2013 JP 2013009405
(43) Date of publication of application: 21.10.2015
(73) Proprietor: Yazaki Corporation, Minato-ku Tokyo 108-8333 (JP)
(72) Inventor: MIKAMI, Hirobumi, Shimada-shi, Shizuoka 427-8555 (JP)
(74) Representative: Brevalex
(86) International application number: PCT/JP2014/051126
(87) International publication number: WO 2014/115727

(56) References cited:
- EP-A2- 2 847 021
- WO-A1-2013/004611
- JP-A- H0 943 531
- JP-A- H1 191 403
- JP-A- H09 109 732
- JP-A- 2003 231 425
- JP-A- 2003 231 425
- JP-A- 2006 069 473
- JP-A- 2007 182 132
- JP-A- 2007 182 132
- US-A1- 2010 046 082
- US-A1- 2012 188 650

## Description

### TECHNICAL FIELD

The present invention relates to a head-up display device that projects a virtual image on a combiner and causes visual recognition of a superimposition of the projected virtual image and a view ahead of a vehicle that is viewed from a viewing point in the vehicle.

### BACKGROUND ART

In recent years, with the increase of the amount and diversity of information drivers require during driving, head-up display devices that project a virtual image of information (in particular, information that is high in emergency) on a combiner disposed over a dashboard and cause visual recognition of a superimposition of the projected virtual image and a view ahead of a vehicle that is seen through the combiner have come to be installed in vehicles such as automobiles and trains (refer to JP-A-2002-331 854 and JP-A-2002-001 855).

### Prior Art Documents

### Patent Documents

However, JP-H11/91403 is considered to be the closest prior art and corresponds to the preamble of claim 1. US-2010/046 082-A1 also represents prior art that discloses information relevant to the invention.

### SUMMARY OF THE INVENTION

### Problems to Be Solved by the Invention

Head-up display devices of the above kind are configured in such a manner that while the head-up display devices are not in use the combiner is put in the dashboard, and an opening formed in the dashboard is closed by a lid member.

However, in the head-up display devices of the above kind, when the combiner is arranged on the dashboard to form a virtual image on the combiner, the lid member is located over the dashboard and hence the lid member is viewable by the driver. Therefore, the lid member lowers the appearance.

Furthermore, it is necessary to secure, over the dashboard, a space for arranging the lid member when the opening is opened by the lid member.

The present invention has been made in the above circumstances, and an object of the invention is therefore to provide a head-up display device that is superior in viewability and design performance and can be installed in a small space.

### Means for Solving the Problems

To attain the above object, a head-up display device according to the invention is described in claim 1. Further details of the invention are disclosed in claim 2. The head-up display device according to the invention further includes guide plates that are disposed on the both sides of the shutter, a plurality of cam grooves formed in each of the guide plates, and a plurality of bosses provided on the shutter so as to be placed in the respective cam grooves, and wherein the bosses are guided by the cam grooves and the shutter is thereby rotated about a horizontal axial line in the vicinity of the opening.

In the head-up display device according to the invention, to use the head-up display (i.e., to cause it to function), the shutter is moved to the escape position which is located under the dashboard and the combiner is moved to and placed at the use position which is located over the dashboard. As a result, an image on the display can be projected on the combiner as a virtual image and the driver is allowed to visually recognize a superimposition of the virtual image and a view ahead of the vehicle satisfactorily. To render the head-up display into a non-use state in which the head-up display does not function, the combiner is moved to the housed position which is located under the dashboard and the shutter is moved to the closing position to close the opening of the dashboard. With the above configurations, no object that is visually recognizable by the driver is located over the dashboard, whereby high viewability can be secured and the design performance of the dashboard can be enhanced. Furthermore, to use the head-up display (i.e., to cause it to function), the shutter is moved to the escape position which is located under the dashboard and where the shutter is not visually recognizable. Therefore, the appearance of what are located over the dashboard can be enhanced and it is made unnecessary to set a space for accommodating the shutter over the dashboard. In addition, since the shutter is placed at the escape position, the space for accommodating the shutter can be minimized also under the dashboard. As a result, the space for accommodating the head-up display device around the dashboard can be minimized.

According to the head-up display device according to the invention, the support stage is moved in the vertical direction by rotating the feed screw by driving the combiner drive motor, whereby the combiner can be moved smoothly and stably between the use position and the housed position.

According to the head-up display device according to the invention, when the combiner is moved, the synchronized shaft (the gears attached to its two respective ends are in mesh with the respective racks of the guide members) is rotated and is moved in the vertical direction while maintaining a horizontal posture. As a result, the combiner which is fixed to the support stage having the synchronized shaft can be moved smoothly without being inclined.

According to the head-up display device according to the invention, when the synchronized shaft is rotated by driving the shutter drive motor, the synchronized shaft (the gears attached to its two respective ends are in mesh with the respective racks of the fixing plates) is moved in the vertical direction while maintaining a horizontal posture of the shutter. As a result, the shutter having the synchronized shaft can be moved smoothly without being inclined.

According to the head-up display device according to the invention, since the bosses are guided by the cam grooves, the shutter can be rotated about a horizontal axial line in the vicinity of the opening. As a result, the posture of the shutter that is oriented approximately vertically at the escape position can easily be converted, in the vicinity of the opening, into such a posture as to form a smooth surface together with the dashboard. Likewise, the posture of the shutter that assumes, at the closing position, such a posture as to form a smooth surface together with the dashboard can easily be converted into an approximately vertical posture.

### Advantages of the Invention

The invention can provide a head-up display device that is superior in viewability and design performance and can be installed in a small space.

The invention has been described above concisely. The details of the invention will become more apparent when the modes for carrying out the invention (hereinafter referred to as an embodiment) described below is read through by referring to the accompanying drawings.

### BRIEF DESCRIPTION OF THE DRAWINGS

[Fig. 1 Figs. 1(a) and 1(b) show the overall configuration of a head-up display device according to an embodiment, Fig. 1 (a) is a schematic side view and Fig. 1 (b) is a schematic perspective view.
[Fig. 2] Figs. 2(a) and 2(b) show the configuration of the head-up display device according to the embodiment, Fig. 2(a) is a side view in a use state and Fig. 2(b) is a side view in a non-use state.
[Fig. 3] Fig. 3 is a perspective view, as viewed from the right side, of a device body of the head-up display device according to the embodiment.
[Fig. 4] Fig. 4 is a perspective view, as viewed from the left side, of the device body of the head-up display device according to the embodiment.
[Fig. 5] Fig. 5 is a side view, as viewed from the left side, of the device body of the head-up display device according to the embodiment.
[Fig. 6] Fig. 6 is a perspective view, as viewed from the right side, of the device body of the head-up display device according to the embodiment.
[Fig. 7] Figs. 7(a) and 7(b) illustrate movements of a combiner and a shutter, Fig. 7(a) is a schematic side view in a non-use state and Fig. 7(b) is a schematic side view illustrating a transition to a use state.
[Fig. 8] Fig. 8 is a perspective view of a combiner moving mechanism.
[Fig. 9] Fig. 9 is a perspective view of a combiner drive unit of the combiner moving mechanism.
[Fig. 10] Fig. 10 is another perspective view of the combiner drive mechanism.
[Fig. 11] Fig. 11 is a perspective view showing supports of the combiner drive unit and a synchronized shaft of a combiner movable unit of the combiner moving mechanism.
[Fig. 12] Fig. 12 is a perspective view of the combiner movable unit of the combiner moving mechanism.
[Fig. 13] Figs. 13(a) and 13(b) illustrate a combiner moving operation of the combiner moving mechanism, Fig. 13(a) is a side view showing a state that the combiner has been moved halfway and Fig. 13(b) is a side view showing a state that the combiner is located at a use position.
[Fig. 14] Fig. 14 is a perspective view, as viewed from the left side, of a shutter moving mechanism.
[Fig. 15] Fig. 15 is another perspective view, as viewed from the left side, of the shutter moving mechanism.
[Fig. 16] Fig. 16 is a perspective view, as viewed from the right side, of the shutter moving mechanism.
[Fig. 17] Fig. 17 is a perspective view of a shutter fixing unit of the shutter moving mechanism.
[Fig. 18] Fig. 18 is an exploded perspective view of the shutter fixing unit of the shutter moving mechanism.
[Fig. 19] Fig. 19 is a perspective view of the shutter.
[Fig. 20] Fig. 20 is a perspective view of a shutter plate of the shutter.
[Fig. 21] Figs. 21(a) to 21(d) illustrate a shutter moving operation of the shutter moving mechanism, Fig. 21 (a) is a side view showing a state that the shutter is located at an escape position, Figs. 21 (b) and 21 (c) are side views showing states that the shutter has been moved halfway, and Fig. 21 (d) is a side view showing a state that the shutter is located at a closing position.

### MODES FOR CARRYING OUT THE INVENTION

An embodiment of the present invention will be hereinafter described with reference to the drawings.

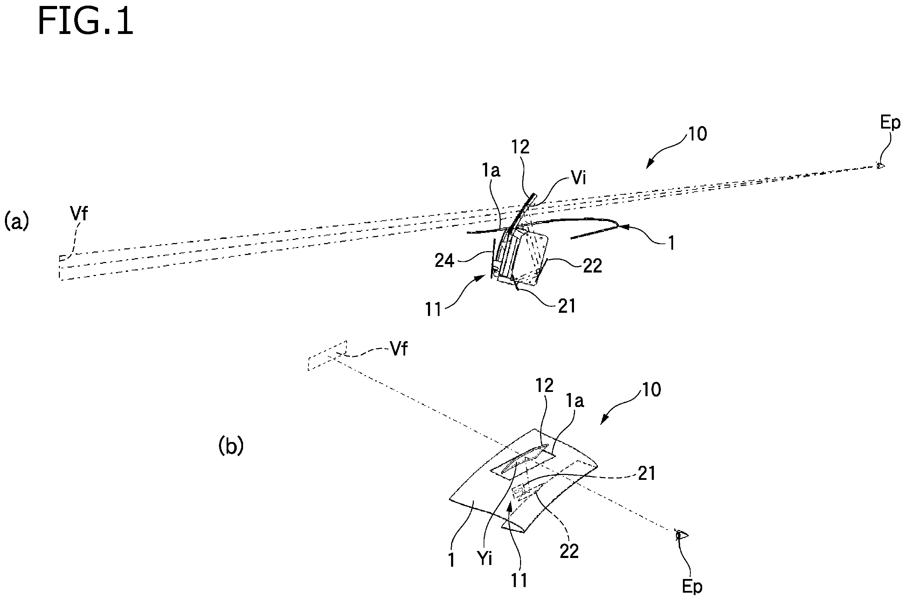

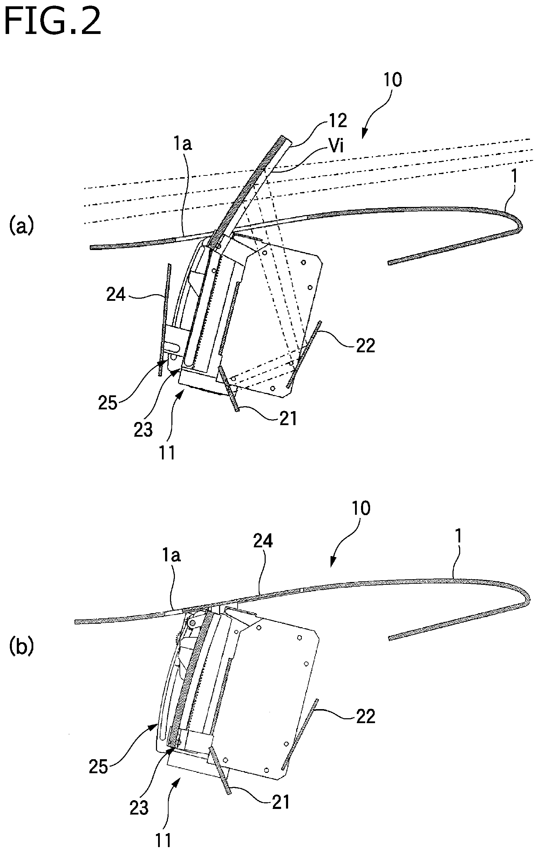

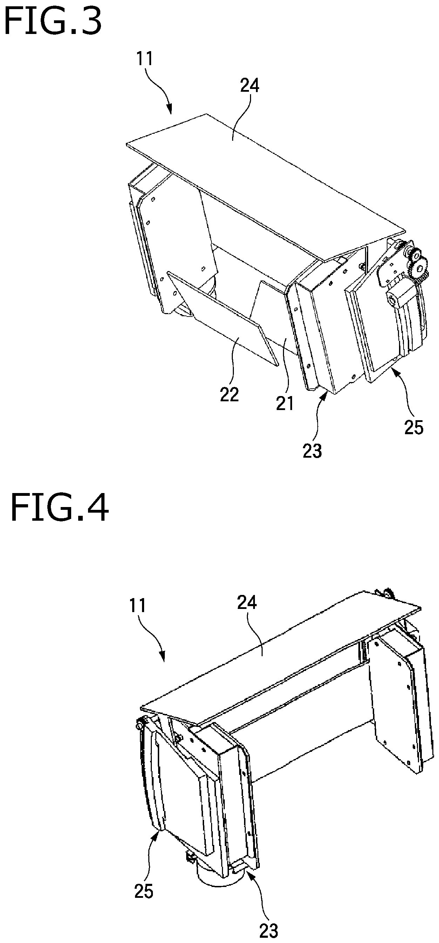

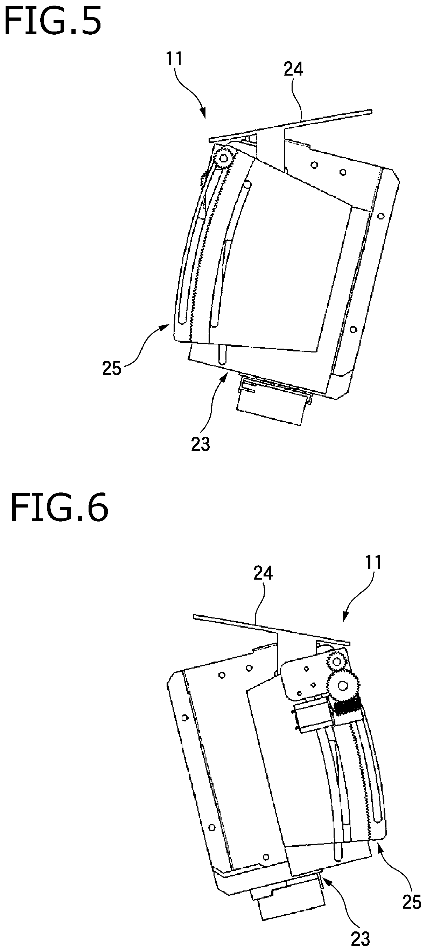

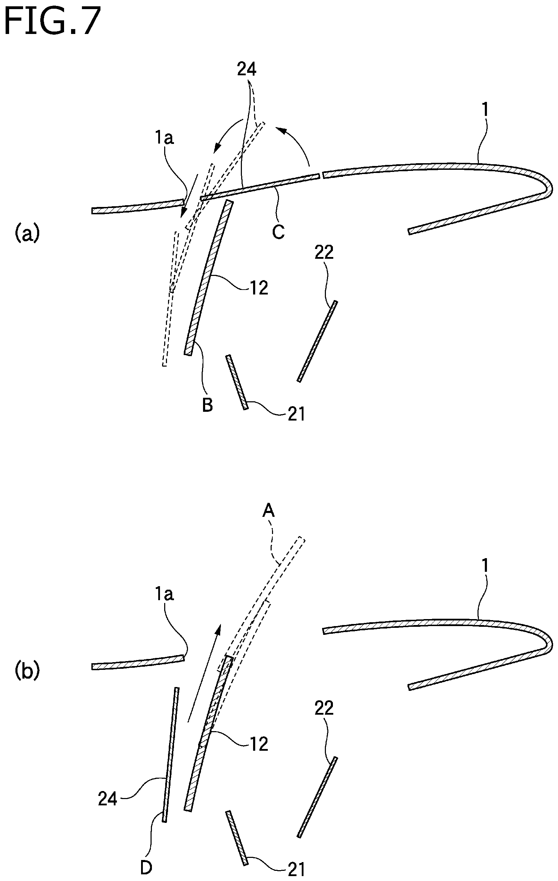

Figs. 1(a) and 1(b) show the overall configuration of a head-up display device according to the embodiment, Fig. 1(a) is a schematic side view and Fig. 1 (b) is a schematic perspective view. Figs. 2(a) and 2(b) show the configuration of the head-up display device according to the embodiment, Fig. 2(a) is a side view in a use state and Fig. 2(b) is a side view in a non-use state. Fig. 3 is a perspective view, as viewed from the right side, of a device body of the head-up display device according to the embodiment. Fig. 4 is a perspective view, as viewed from the left side, of the device body of the head-up display device according to the embodiment. Fig. 5 is a side view, as viewed from the left side, of the device body of the head-up display device according to the embodiment. Fig. 6 is a perspective view, as viewed from the right side, of the device body of the head-up display device according to the embodiment. Figs. 7(a) and 7(b) illustrate movements of a combiner and a shutter, Fig. 7(a) is a schematic side view in a non-use state and Fig. 7(b) is a schematic side view illustrating a transition to a use state.

As shown in Figs. 1 (a) and 1 (b), in the head-up display device 10 according to the embodiment, a device body 11 is disposed under a dashboard 1. The device body 11 of the head-up display device 10 is provided with a combiner 12 and the combiner 12 is projected upward through an opening 1a of the dashboard 1 so as to be placed over the dashboard 1. A virtual image of, for example, information that the driver requires during driving is projected on the combiner 12. As such, the head-up display device 10 causes the driver to visually recognize a superimposition of a virtual image Vi projected on the combiner 12 and a view Vf ahead of the vehicle that is seen from the viewing point Ep of the driver through the wind shield of the vehicle. The display information include any data such as image data, guidance data, or index data.

As shown in Figs. 2(a) and 2(b), the device body 11 of the head-up display device 10 is provided with a display 21 for forming a virtual image Vi and a mirror 22 for reflecting an image of the display 21 and thereby guiding it to the combiner 12.

As shown in Figs. 3-6, the device body 11 is provided with a combiner moving mechanism 23 for moving the combiner 12. The device body 11 is provided with a shutter 24 and a shutter moving mechanism 25 for moving the shutter 24.

As shown in Figs. 7(a) and 7(b), the combiner 12 is moved by the combiner moving mechanism 23 between a use position (indicated by symbol A in Fig. 7(b)) where it projects through the opening 1a of the dashboard 1 and a housed position (indicated by symbol B in Fig. 7(a)) where it is housed in the dashboard 1 after being pulled back through the opening 1a. The shutter 24 is moved by the shutter moving mechanism 25 between a closing position (indicated by symbol C in Fig. 7(a)) where it closes the opening 1a of the dashboard 1 and an escape position (indicated by symbol D in Fig. 7(b)) where is placed approximately vertically inside the dashboard 1. When the combiner 12 is moved from the housed position to the use position, the shutter 24 is moved from the closing position to the escape position without interfering with the combiner 12. When the combiner 12 is moved from the use position to the housed position, the shutter 24 is moved from the escape position to the closing position without interfering with the combiner 12. In this manner, the shutter moving mechanism 25 operates in link with the combiner moving mechanism 23. As a result, the opening 1a of the dashboard 1 is rendered in an open state when the combiner 12 is located at the use position, and is rendered in a closed state when the combiner 12 is located at the housed position.

Next, the combiner moving mechanism 23 will be described.

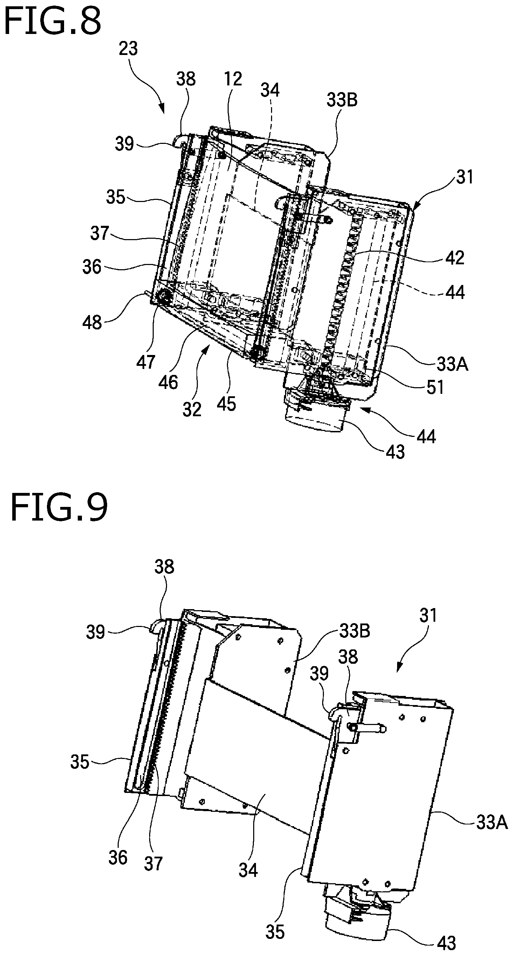

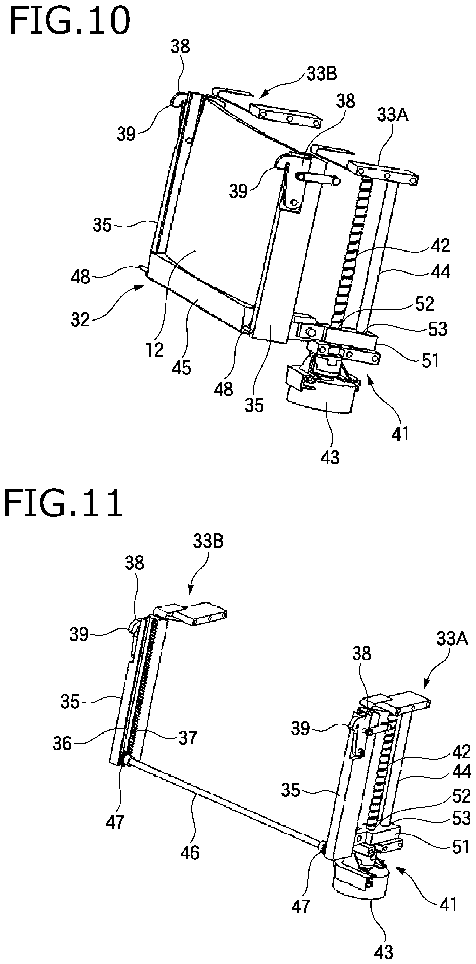

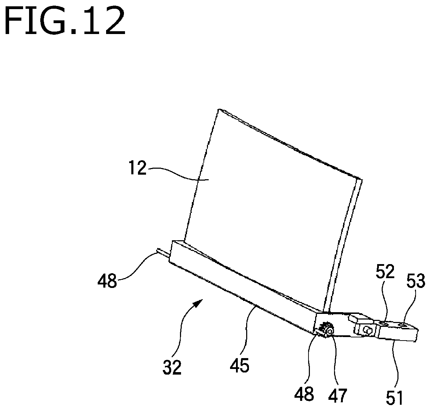

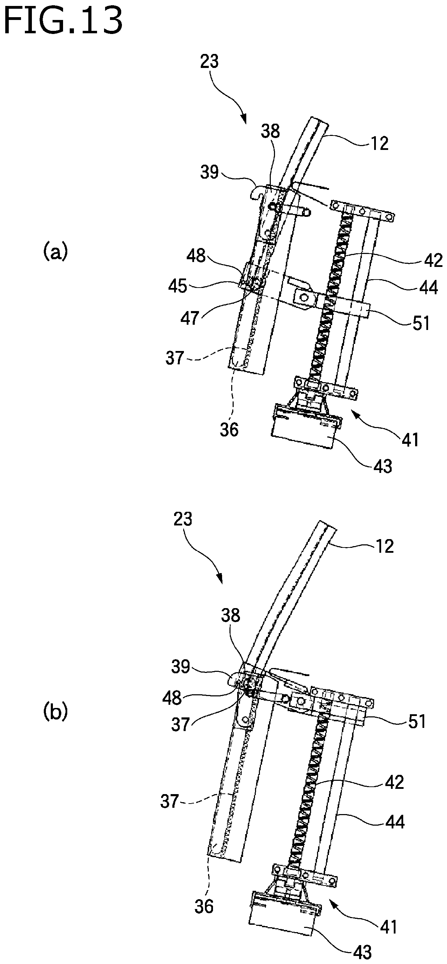

Fig. 8 is a perspective view of the combiner moving mechanism. Fig. 9 is a perspective view of a combiner drive unit of the combiner moving mechanism. Fig. 10 is a perspective view of the combiner drive mechanism. Fig. 11 is a perspective view showing supports of the combiner drive unit and a synchronized shaft of a combiner movable unit of the combiner moving mechanism. Fig. 12 is a perspective view of the combiner movable unit of the combiner moving mechanism. Figs. 13(a) and 13(b) illustrate a combiner moving operation of the combiner moving mechanism, Fig. 13(a) is a side view showing a state that the combiner has been moved halfway and Fig. 13(b) is a side view showing a state that the combiner is located at a use position.

As shown in Figs. 8-12, the combiner moving mechanism 23 has a combiner drive unit 31 and a combiner movable unit 32.

The combiner drive unit 31 includes left and right supports 33A and 33B, which are spaced from each other and linked to each other by a link plate 34. The supports 33A and 33B are equipped with respective guide members 35. The inner surfaces, opposed to each other, of the guide members 35 are formed with guide grooves 36, respectively. The guide grooves 36 extend in the vertical direction and are curved slightly. One side of each wall in which a guide groove 36 is formed is formed with a rack 37.

A top portion of each guide member 35 is provided with a lock plate 38 on the outside. The lock plate 38 has a nail 39 that projects from its periphery.

The one support 33A is provided with a drive unit 41. The drive unit 41 includes a feed screw 42 that extends in the vertical direction and whose top and bottom end portions are supported rotatably and a combiner drive motor 43 that is attached to the bottom end of the feed screw 42. The feed screw 42 is rotated by the combiner drive motor 43. The one support 33A is also provided with a guide lock 44 that extends parallel with the feed screw 42.

The combiner movable unit 32 includes a support stage 45. The bottom periphery of the combiner 12 is fixed to the support stage 45. The support stage 45 is provided with a synchronized shaft 46 rotatably. The synchronized shaft 46 is provided with gears 47 at the two respective ends, and the gears 47 are disposed outside the support stage 45. Lock pins 48 project outward from two respective ends of the support stage 45. An elevation block (block) 51 is linked and fixed to one end of the support stage 45. A screw hole 52 and an insertion hole 53 are formed through the elevation block 51.

The support stage 45 of the combiner movable unit 32 is disposed between the guide members 35 of the combiner drive unit 31. The lock pins 48 of the support stage 45 are located on the sides where the nails 39 of the lock plates 38 which are attached to the guide members 35, respectively. The gears 47, disposed outside the support stage 45, of the synchronized shaft 46 of the combiner movable unit 32 are disposed in the respective guide grooves 36 of the guide members 35 of the combiner drive unit 31 and are in mesh with the respective racks 37 of the guide grooves 36. A feed screw 42 is threadedly engaged with the screw hole 52 which is formed through the elevation block 51 of the combiner movable unit 32, and a guide rod 44 is inserted through the insertion hole 53 which is formed through the elevation block 51.

With the combiner moving mechanism 23 having the above structure, to move the combiner 12 from the housed position to the use position, the combiner drive motor 43 of the combiner drive unit 31 is driven. In response, the feed screw 52 is rotated and, as shown in Fig. 13(a), the elevation block 51, whose screw hole 52 is threadedly engaged with the feed screw 42, of the combiner movable unit 32 is elevated alongside the guide rod 44 which is inserted through the insertion hole 53. Thus, the support stage 45 of the combiner movable unit 32 is elevated. At the same time, the synchronized shaft 46 (the gears 47 attached to its two respective ends are in mesh with the respective racks 37 of the guide grooves 36) is rotated and elevated along a gently curved arc while maintaining a horizontal posture. As a result, the support stage 45 is elevated while maintaining a horizontal posture. In this manner, the combiner 12 which is supported by the support stage 45 is elevated through the opening 1a of the dashboard 1 to over the dashboard 1 along a gently curved arc without being inclined. As shown in Fig. 13(b), once the support stage 45 is moved to the highest position, the driving of the combiner drive motor 43 is stopped and hence the support stage 45 is stopped. And the nails 39 of the lock plates 38 are locked on the respective lock pins 48 of the support stage 45, whereby the support stage 45 is held at the top position of the guide members 35. The combiner 12 is thus placed at the use position. In this state, a virtual image Vi of the image that is guided from the display 21 is projected on the combiner 12.

To move the combiner 12 from the use position to the housed position, the combiner drive motor 43 of the combiner drive unit 31 is driven reversely. In response, the feed screw 42 is rotated in the reverse direction, the elevation block 51 is lowered along the guide rod 44, and the support stage 45 of the combiner movable unit 32 is lowered. Also in this operation, the synchronized shaft 46 (the gears 47 attached to its two respective ends are in mesh with the respective racks 37 of the guide grooves 36) is rotated and lowered along a gently curved arc while maintaining a horizontal posture. As a result, the support stage 45 is lowered while maintaining a horizontal posture. In this manner, the combiner 12 which is supported by the support stage 45 is lowered toward the housed position along a gently curved arc without being inclined and moved to the housed position which is located under the dashboard 1.

Next, the shutter moving mechanism 25 will be described.

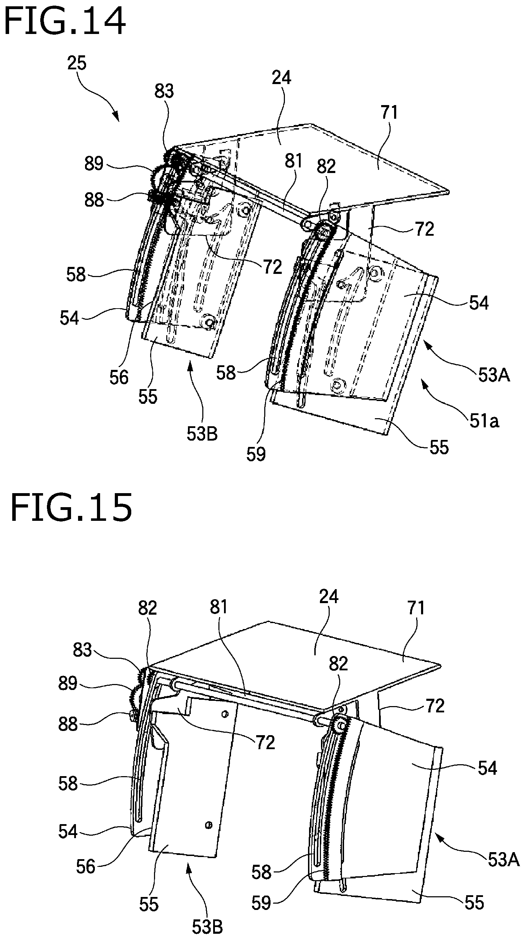

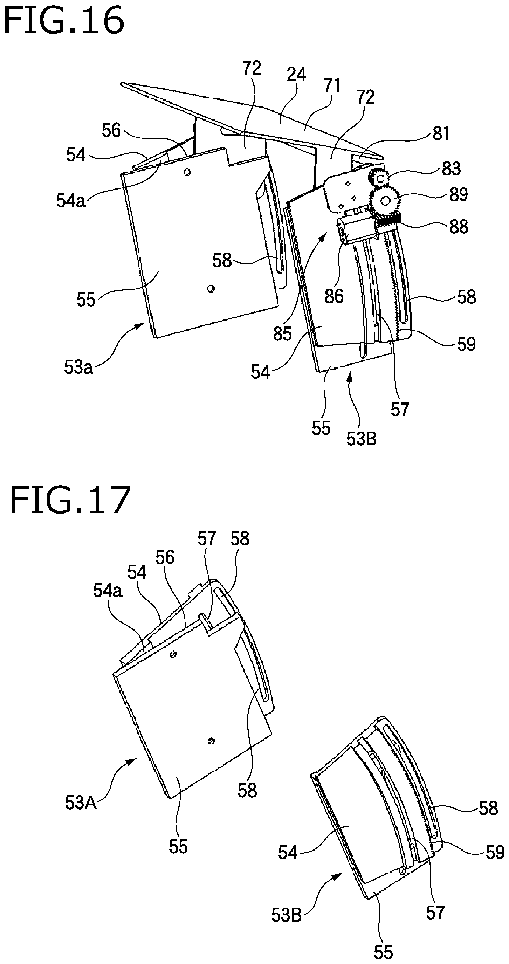

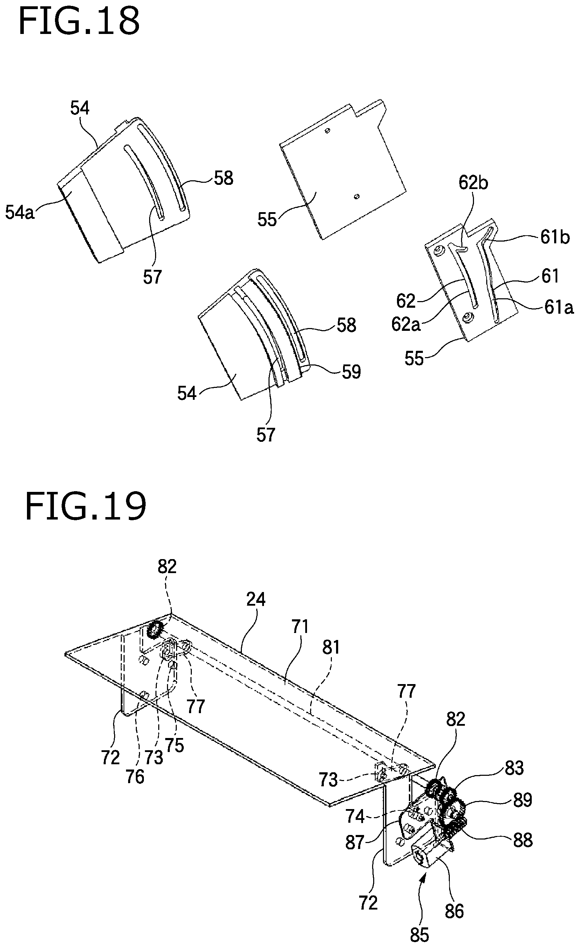

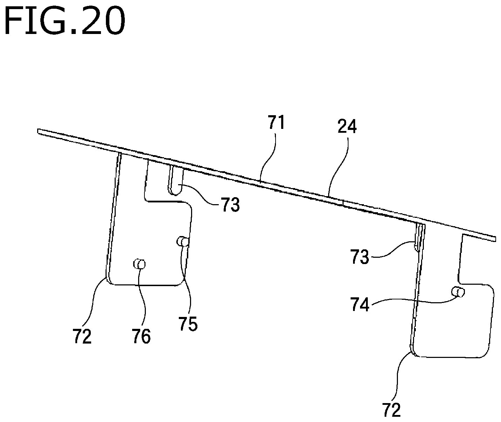

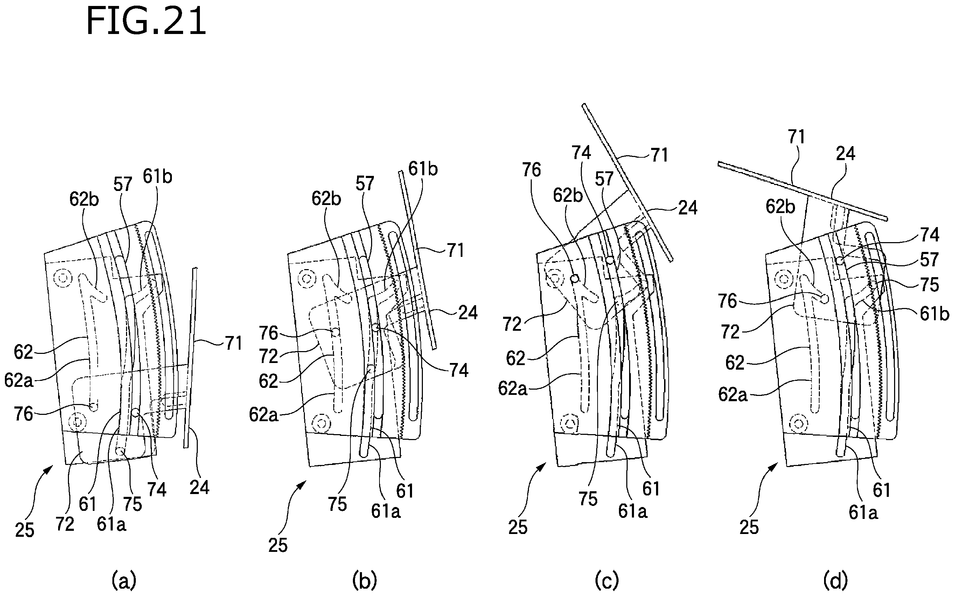

Fig. 14 is a perspective view, as viewed from the left side, of the shutter moving mechanism. Fig. 15 is another perspective view, as viewed from the left side, of the shutter moving mechanism. Fig. 16 is a perspective view, as viewed from the right side, of the shutter moving mechanism. Fig. 17 is a perspective view of a shutter fixing unit of the shutter moving mechanism. Fig. 18 is an exploded perspective view of the shutter fixing unit of the shutter moving mechanism. Fig. 19 is a perspective view of the shutter. Fig. 20 is a perspective view of a shutter plate of the shutter. Figs. 21(a) to 21(d) illustrate a shutter moving operation of the shutter moving mechanism, Fig. 21(a) is a side view showing a state that the shutter is located at the escape position, Figs. 21 (b) and 21 (c) are side views showing states that the shutter has been moved halfway, and Fig. 21 (d) is a side view showing a state that the shutter is located at the closing position.

As shown in Figs. 14-16, the shutter moving mechanism 25 includes a shutter fixing unit 51a that supports the shutter 24.

As shown in Figs. 17 and 18, the shutter fixing unit 51a includes left and right fixing units 53A and 53B, each of which has a fixing plate 54 and a guide plate 55 that is fixed so as to be located on the inside surface side of the fixing plate 54. The fixing plate 54 is formed with a projection surface 54a that is closer to the guide plate 55, and the guide plate 55 is in contact with the guide plate 55. Thus, a gap 56 corresponding to the projection length of the projection surface 54a is formed between the fixing plate 54 and the guide plate 55.

The fixing plate 54 is formed with a guide groove 57 which extends in the vertical direction and is curved slightly. A long hole 58 is formed through the fixing plate 54 parallel with the guide groove 57. Furthermore, the fixing plate 54 is formed with a rack 59 outside the long hole 58 along side it.

The surface, opposed to the fixing plate 54, of the guide plate 55 is formed with a first cam groove (cam groove) 61 and a second cam groove (cam groove) 62. The first cam groove 61 has a first vertical cam groove portion 61a that extends in the vertical direction and a first slant cam groove portion 61b that extends from the top end of the first vertical cam groove portion 61a obliquely upward toward the side that is opposite to the second cam groove 62. The second cam groove 62 has a second vertical cam groove portion 62a that extends in the vertical direction and a second slant cam groove portion 62b that extends from the top end of the second vertical cam groove portion 62a obliquely downward toward the first cam groove 61.

As shown in Figs. 19 and 20, the shutter 24 has a rectangular shutter plate 71. Slide plates 72 and support pieces 73 are fixed to the bottom surface of the shutter plate 71 at positions close to its two respective ends. A guide boss 74 is formed on the outside surface of each slide plate 72. A first boss (boss) 75 and a second boss (boss) 76 are formed on the inside surface of each slide plate 72 so as to be spaced from each other. A link piece 77 is linked to each support piece 73 rotatably. A synchronized shaft 81 is supported rotatably by the link pieces 77 on the side that is opposite to the side where the link pieces 77 are linked to the respective support pieces 73. The synchronized shaft 81 is provided with gears 82 at the two respective ends. The synchronized shaft 81 is provided, at one end, with a follower gear 83 on the tip side the gear 82.

One slide plate 72 is provided with a drive unit 85. The drive unit 85 has a shutter drive motor 86 that is fixed to a bracket 87 that is supported by the one slide plate 72. A worm gear 88 is attached to the rotary shaft of the shutter drive motor 86. The worm gear 88 is in mesh with a transmission gear 89 that is supported by the bracket 87 rotatably. The transmission gear 89 is in mesh with the follower gear 83.

The slide plates 72 of the shutter 24 is disposed in the gaps 56 which are formed in the fixing units 53A and 53B of the shutter fixing unit 51a, respectively. The guide bosses 74 of the slide plates 72 are placed in the guide grooves 57 of the fixing plates 54, respectively. The synchronized shaft 81 is inserted through the long holes 58 of the fixing plates 54, and the gears 82 of the synchronized shaft 81 are in mesh with the racks 59 of the fixing plates 54, respectively. The first bosses 75 of the slide plates 72 are placed in the first cam grooves 61 of the guide plates 55, respectively, and the second bosses 76 of the slide plates 72 are placed in the second cam grooves 62 of the guide plates 55, respectively.

With the shutter moving mechanism 25 having the above structure, to move the shutter 24 from the escape position to the closing position, the shutter drive motor 86 is driven. In response, the worm gear 88 is rotated and its rotational power is transmitted to the follower gear 83 via the transmission gear 89, whereby the synchronized shaft 81 is rotated. As a result, synchronized shaft 81 (the gears 82 attached to its two respective ends are in mesh with the respective racks 59) is elevated while being rotated. Therefore, as shown in Fig. 21 (a), the shutter 24 that is located at the escape position (the shutter plate 71 is oriented approximately vertically) starts to be elevated. During that course, the guide bosses 74, the first bosses 75, and the second bosses 76 of the slide plates 72 are guided by the guide grooves 57, the first vertical cam groove portions 61a of the first cam grooves 61, and the second vertical cam groove portions 62a of the second cam grooves 62, respectively. Thus, as shown in Fig. 21(b), the shutter plate 71 of the shutter 24 is elevated being oriented approximately vertically and the shutter 24 is moved toward the opening 1a of the dashboard 1.

When the first bosses 75 reach the top ends of the first vertical cam groove portions 61a of the first cam grooves 61 and the second bosses 76 reach the top ends of the second vertical cam groove portions 62a of the second cam grooves 62 (see Fig. 21 (c)), the upward movements of the first bosses 75 and the second bosses 76 are restricted. Furthermore, at this time point, the guide bosses 74 reach the top ends of the guide grooves 57 and its upward movement is also restricted.

Then, as shown in Fig. 21 (d), the first bosses 75 are pulled into the respective first slant cam groove portions 61b and moved obliquely upward and the second bosses 76 are pulled into the respective second slant cam groove portions 62b and moved obliquely downward. As a result, the slide plates 72 are rotated about the horizontal axial line that passes the guide bosses 74. In this manner, the shutter plate 71 of the shutter 24 is placed at the closing position approximately horizontally and the opening 1a of the dashboard 1 is closed.

To move the shutter from the closing position to the escape position, the shutter drive motor 86 is driven reversely. In response, the worm gear 88 is rotated reversely, its rotational power is transmitted to the follower gear 83 via the transmission gear 89, and the synchronized shaft 81 is rotated. As a result, the synchronized shaft 81 (the gears 82 attached to its two respective ends are in mesh with the respective racks 59) is lowered while being rotated. Therefore, the first bosses 75 now located in the first slant cam groove portions 61b are moved obliquely downward toward the top ends of the first vertical cam groove portions 61a, respectively, and the second bosses 76 now located in the second slant cam groove portions 62b are moved obliquely upward toward the top ends of the second vertical cam groove portions 62a, respectively. Thus, the slide plates 72 are rotated reversely about the horizontal axial line that passes the guide bosses 74, the shutter plate 71 of the shutter 24 is oriented approximately vertically, and the opening 1a of the dashboard 1 is opened (see Fig. 21 (c)).

Subsequently, the guide bosses 74, the first bosses 75, and the second bosses 76 are guided by the guide grooves 57, the first vertical cam groove portions 61a of the first cam grooves 61, and the second vertical cam groove portions 62a of the second cam grooves 62, respectively. The shutter plate 71 is lowered being oriented approximately vertically and, and the shutter 24 is pulled into the space under the dashboard 1 and moved to the escape position (see Fig. 21(a)).

As described above, in the head-up display device according to the embodiment, to use the head-up display (i.e., to cause it to function), the shutter 24 is moved to the escape position which is located under the dashboard 1 and the combiner 12 is moved to and placed at the use position which is located over the dashboard 1. As a result, the image of the display 21 can be projected on the combiner 12 as a virtual image Vi and the driver is allowed to visually recognize a superimposition of the virtual image Vi and a view Vf ahead of the vehicle satisfactorily. To render the head-up display into a non-use state in which it does not function, the combiner 12 is moved to the housed position which is located under the dashboard 1 and the shutter 24 is moved to the closing position to close the opening 1a of the dashboard 1. With the above configurations, no object that is visually recognizable by the driver is located over the dashboard 1, whereby high viewability can be secured and the design performance of the dashboard 1 can be enhanced.

To use the head-up display (i.e., to cause it to function), the shutter 24 is moved to the escape position which is located under the dashboard 1 and where it is not visually recognizable. Therefore, the appearance of what are located over the dashboard 1 can be enhanced and it is made unnecessary to set a space for accommodating the shutter 24 over the dashboard 1. In addition, since the shutter 24 is oriented approximately vertically at the escape position, the space for accommodating it can be minimized also under the dashboard 1. As a result, the space for accommodating the head-up display device 10 around the dashboard 1 can be minimized. It is noted that the posture of the shutter 24 at the escape position is not limited to the posture that it is perpendicular to the horizontal plane. The shutter 24 may assume any posture that allows it to be moved without touching the combiner 12.

The support stage 45 is moved in the vertical direction by rotating the feed screw 42 by driving the combiner drive motor 43, whereby the combiner 12 can be moved smoothly and stably between the use position and the housed position.

Furthermore, when the combiner 12 is moved, the synchronized shaft 46 (the gears 47 attached to its two respective ends are in mesh with the respective racks 37 of the guide members 37) is rotated and is moved in the vertical direction while maintaining a horizontal posture. As a result, the combiner 12 which is fixed to the support stage 45 having the synchronized shaft 46 can be moved smoothly without being inclined.

When the synchronized shaft 81 is rotated by driving the shutter drive motor 86, the synchronized shaft 81 (the gears 82 attached to its two respective ends are in mesh with the respective racks 59 of the fixing plates 54) is moved in the vertical direction while maintaining a horizontal posture. As a result, the shutter 24 having the synchronized shaft 81 can be moved smoothly without being inclined.

Furthermore, since the first bosses 75 and the second bosses 76 are guided by the first cam grooves 61 and the second cam grooves 62, respectively, the shutter 24 can be rotated about the horizontal axial line in the vicinity of the opening 1a. As a result, the posture of the shutter 24 that is oriented approximately vertically at the escape position can easily be converted, in the vicinity of the opening 1a, into an approximately horizontal posture so that the shutter 24 forms a smooth surface together with the dashboard 1. Likewise, the posture of the shutter 24 that assumes an approximately horizontal posture at the closing position so that it forms a smooth surface together with the dashboard 1 can easily be converted into an approximately vertical posture.

Since the combiner moving mechanism 23 for moving the combiner 12 and the shutter moving mechanism 25 for moving the shutter 24 are provided with the respective drive sources, that is, the combiner drive motor 43 and the shutter drive motor 86, each mechanism can perform driving with a high degree of freedom. As a result, the shutter 24 can easily be moved to the position where it closes the opening 1a and provides a sense of unity with the dashboard 1.

The invention is not limited the above embodiment, and various modifications, improvements, etc. can be made as appropriate. And the material, shape, dimensions, number, location, etc. of each constituent element of the embodiment are optional and no limitations are imposed on them as long as the invention can be implemented.

Although the invention has been described in detail by referring to the particular embodiment, it is apparent to those skilled in the art that various changes and modifications are possible without departing from the scope of the invention.

### Industrial Applicability

The head-up display device according to the invention is superior in viewability and design performance and can be installed in a small space. Providing those advantages, the invention is useful when applied to the field of head-up display devices that project a virtual image on a combiner and cause visual recognition of a superimposition of the projected virtual image and a view ahead of a vehicle that is viewed from a viewing point in the vehicle.

### Description of Symbols

1: Dashboard
1a: Opening
10: Head-up display device
11: Device body
12: Combiner
21: Display
23: Combiner moving mechanism
24: Shutter
25: Shutter moving mechanism
35: Guide member
37: Rack
42: Feed screw
43: Combiner drive motor
45: Support stage
46: Synchronized shaft
47: Gear
51: Elevation block (block)
52: Screw hole
54: Fixing pate
55: Guide plate
59: Rack
61: First cam groove (cam groove)
62: Second cam groove (cam groove)
75: First boss (boss)
76: Second boss (boss)
81: Synchronized shaft
82: Gear
86: Shutter drive motor
Vi: Virtual image

## Claims

1. A head-up display device comprising:
a device body (11) adapted to be disposed under a dashboard (1) of a vehicle;
a combiner (12) configured to be moved through an opening (1a) formed in the dashboard (1) between a use position located over the dashboard (1) and a housed position located under the dashboard (1);
a display (21) that is provided in the device body and projects a virtual image on the combiner placed at the use position;
a combiner moving mechanism (23) that is provided in the device body and is adapted to move the combiner between the use position and the housed position;
a shutter (24) that has approximately the same external shape as the opening and configured to be moved between a closing position (C) where the shutter closes the opening and an escape position (D) where the shutter is oriented vertically and is located under the opening of the dashboard; and
a shutter moving mechanism (25) that is provided in the device body and is adapted to move the shutter to the escape position located under the opening when the combiner is moved to the use position, and moves the shutter to the closing position when the combiner is moved to the housed position,
wherein the combiner moving mechanism comprises a support stage (45) to which a bottom end of the combiner is fixed, a feed screw (42) which extends in the vertical direction and is threadedly engaged with a screw hole (52) that is formed in a block (51) linked to the support stage, and a combiner drive motor (43) which rotates the feed screw; the device being **characterized in that**:
guide members (35) having respective racks (37) extending in the vertical direction are disposed on both sides of the support stage;
the support stage (45) has a synchronized shaft (46) that is supported so as to be rotatable about a horizontal axial line; and
gears (47) that are in mesh with the respective racks are attached to both ends of the synchronized shaft.

2. The head-up display device according to claim 1, wherein
the shutter moving mechanism (25) comprises fixing plates (54) disposed on the both sides of the shutter, racks (59) formed in the respective fixing plates (54) so as to extend in the vertical direction, a synchronized shaft (81) which is supported by the shutter so as to be rotatable about a horizontal axial line, and a shutter drive motor (86) which is provided on the shutter and rotates the synchronized shaft; and
wherein gears (82) being in mesh with the respective racks (59) are attached to both ends of the synchronized shaft (81).

## Patentansprüche

1. Eine Blickfeldanzeigevorrichtung mit:
einem Vorrichtungskörper (11), der eingerichtet ist, um unter einer Instrumententafel (1) eines Fahrzeugs angeordnet zu werden,
einem Kombinierer (12), der ausgestaltet ist, um durch eine Öffnung (1a), die in der Instrumententafel (1) ausgebildet ist, zwischen einer Einsatzposition, die sich über der Instrumententafel (1) befindet, und einer untergebrachten Position, die sich unter der Instrumententafel (1) befindet, bewegt zu werden,
einer Anzeige (21), die in dem Vorrichtungskörper vorgesehen ist und ein virtuelles Bild auf den Kombinierer, der sich an der Einsatzposition befindet, projiziert,
einem Kombinierer-Bewegungsmechanismus (23), der in dem Vorrichtungskörper vorgesehen ist und eingerichtet ist, um den Kombinierer zwischen der Einsatzposition und der untergebrachten Position zu bewegen,
einer Blende (24), die annähernd dieselbe Außenform wie die Öffnung besitzt und ausgestaltet ist, um zwischen einer Schließposition (C), wo die Blende die Öffnung verschließt, und einer Ausfahrposition (D), wo die Blende vertikal orientiert ist und sich unter der Öffnung der Instrumententafel befindet, bewegt zu werden, und
einem Blenden-Bewegungsmechanismus (25), der in dem Vorrichtungskörper vorgesehen ist und eingerichtet ist, um die Blende zu der Ausfahrposition, die sich unter der Öffnung befindet, zu bewegen, wenn der Kombinierer zu der Einsatzposition bewegt wird bzw. ist, und der die Blende zu der Schließposition bewegt, wenn der Kombinierer zu der untergebrachten Position bewegt wird bzw. ist,
wobei der Kombinierer-Bewegungsmechanismus eine Tragstufe (45), an der ein unteres Ende des Kombinierers befestigt ist, eine Förderschraube oder -schnecke (42), die sich in der Vertikalrichtung erstreckt und im Schraubeingriff mit einem Schraub- oder Gewindeloch (52) ist, das in einem Block (51) ausgebildet ist, der mit der Tragstufe verbunden ist, und einen Kombinierer-Antriebsmotor (43), der die Förderschraube oder -schnecke rotiert, aufweist,
wobei die Vorrichtung **dadurch gekennzeichnet ist, dass**:
Führungselemente (35) mit jeweiligen Zahnstangen (37), die sich in der Vertikalrichtung erstrecken, an beiden Seiten der Tragstufe angeordnet sind,
die Tragstufe (45) eine synchronisierte Welle (46) besitzt, die so getragen ist, dass sie um eine horizontale Axiallinie rotierbar ist, und
Zahnräder (47), die im Eingriff mit den jeweiligen Zahnstangen sind, an beiden Enden der synchronisierten Welle angebracht sind.

2. Die Blickfeldanzeigevorrichtung gemäß Anspruch 1, wobei der Blenden-Bewegungsmechanismus (25) Befestigungsplatten (54), die an den beiden Seiten der Blende angeordnet sind, Zahnstangen (59), die in den jeweiligen Befestigungsplatten (54) so ausgebildet sind, dass sie sich in der Vertikalrichtung erstrecken, eine synchronisierte Welle (81), die durch die Blende so getragen ist, dass sie um eine horizontale Axiallinie rotierbar ist, und einen Blenden-Antriebsmotor (86), der an der Blende vorgesehen ist und die synchronisierte Welle rotiert, aufweist, und
wobei Zahnräder (82), die im Eingriff mit den jeweiligen Zahnstangen (59) sind, an beiden Enden der synchronisierten Welle (81) angebracht sind.

## Revendications

1. Dispositif d'affichage tête haute comprenant :
- un corps de dispositif (11) adapté à être disposé sous un tableau de bord (1) d'un véhicule ;
- un combineur (12) configuré pour être déplacé à travers une ouverture (1a) formée dans le tableau de bord (1) entre une position d'utilisation située au-dessus du tableau de bord (1) et une position rangée située sous le tableau de bord (1) ;
- un afficheur (21) qui est compris dans le corps de dispositif et projette une image virtuelle sur le combineur placé à la position d'utilisation ;
- un mécanisme de mouvement du combineur (23) que contient le corps de dispositif et qui est adapté à déplacer le combineur entre la position d'utilisation et la position rangée ;
- un volet (24) qui a approximativement la même forme extérieure que l'ouverture et qui est configuré pour être déplacé entre une position de fermeture (C) où le volet ferme l'ouverture et une position d'échappement (D) où le volet est orienté verticalement et placé sous l'ouverture du tableau de bord ; et
- un mécanisme de déplacement du volet (25) que contient le corps de dispositif et qui est adapté pour déplacer le volet à la position d'échappement situé sous l'ouverture lorsque le combineur est déplacé à la position d'utilisation, et déplace le volet à la position de fermeture quand le combineur est déplacé à la position rangée,
dans lequel le mécanisme de déplacement du combineur comprend un plateau de support (45) auquel une extrémité de fond du combineur est fixé, une vis d'avancement (42) qui s'étend dans la direction verticale et qui est engagée par filetage dans un taraudage (52) formé dans un bloc (51) relié au plateau de support, et un moteur de déplacement du combineur (43) qui fait tourner la vis d'avancement ; le dispositif étant **caractérisé en ce que** :
- des éléments de guidage (35), ayant des crémaillères respectives (37) s'étendant dans la direction verticale, sont disposés des deux côtés du plateau de support ;
- le plateau de support (45) a un arbre synchronisé (46) qui est soutenu de manière à pouvoir tourner autour d'une ligne axiale horizontale ; et
- des roues dentées (47) qui sont en engrènement avec les crémaillères respectives sont attachées aux deux extrémités de l'arbre synchronisé.

2. Dispositif d'affichage tête haute selon la revendication 1, dans lequel le mécanisme de déplacement de volet (25) comprend des plaques de fixation (54) disposées des deux côtés du volet, des crémaillères (59) formées dans les plaques de fixation respectives (54) de manière à s'étendre dans la direction verticale, un arbre synchronisé (81) qui est soutenu par le volet de manière à pouvoir tourner autour d'une ligne axiale horizontale, et un moteur d'entraînement de volet (86) qui est disposé sur le volet et fait tourner l'arbre synchronisé ; et
dans lequel des roues dentées (82) en engrènement avec les crémaillères respectives (59) sont attachées aux deux extrémités de l'arbre synchronisé (81).
